# EUROPEAN PATENT APPLICATION

(11) **EP 0 605 199 A2**
(43) Date of publication of application: **06.07.1994**
(21) Application number: 93310454.9
(22) Date of filing: 23.12.1993
(51) Int. Cl.: H02J 9/06

(54) **An emergency power supply unit without transformers**

(30) Priority: 31.12.1992 CN 92112088
(71) Applicant: GUANGDONG CAPITAL HOLDINGS LTD., Hong Kong (HK)
(72) Inventor: Huang, Fu-Bin, Hong Kong (HK)
(74) Representative: Pacitti, Pierpaolo A.M.E.

(57) **Abstract**

An emergency power supply unit, capable of direct inverse transform, comprising a charging detector circuit (102), a storage battery (2), an oscillator circuit (3), and an output switching circuit (4), said power supply unit containing no transformers, and said storage battery (2) consisting of a pack of cells having the same voltage as that of the mains supply.

## Description

### Background of the Invention

The present invention relates to an emergency power supply unit without transformers, particularly a voltage stabilizing direct inverse transform power supply unit.

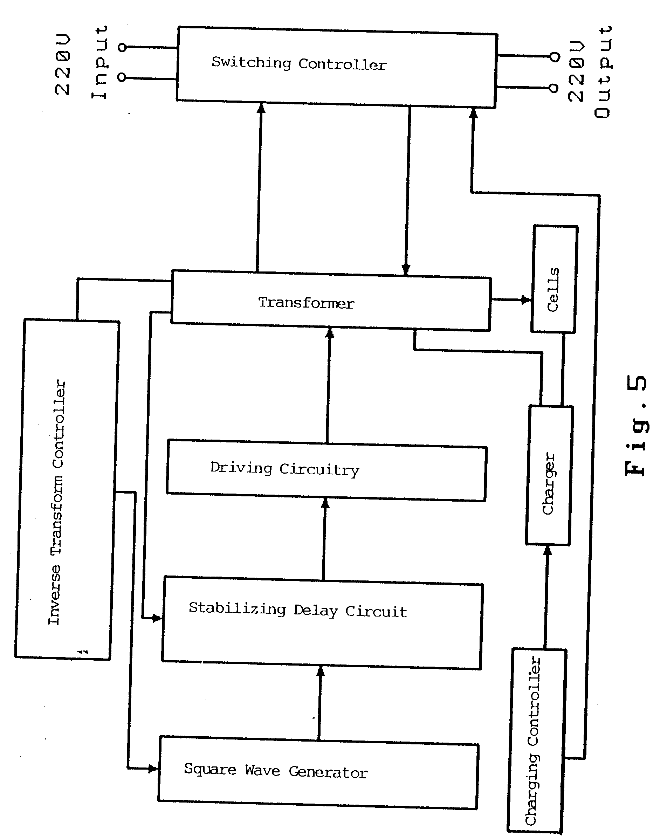

Most inverse transform power supply units available use a step down transformer to reduce the mains voltage (220 V. or 110 V.) to a suitable level, so as to charge the cells (usually 12 V. or 24 V. lead-acid cells), and to store energy. When there is a power failure, the stored energy is transformed, through an oscillating circuit, to a square-wave or sine-wave output, which is further stepped up by another transformer, to be supplied to a load. Fig. 5 is a block diagram of such a conventional inverse transform power supply unit. Such units have the following disadvantages: First of all, there is a transformer loss; next, transformers are very heavy and bulky, involving complicated technology and a high cost.

### Object of the Invention

The object of the present invention is to provide an emergency power supply unit without transformers, capable of direct high voltage inverse transform, such that the mains power (220 V. or 110 V.) is used to directly charge the cells, and a direct supply of high voltage power to the load is obtained from the unit. In this manner, transformers are dispensed with, thus decreasing circuitry loss and lowering the volume and weight of the unit, as well as its cost of production.

### Brief Description of Drawings

The above and other advantages of the present invention will be clearly seen with reference to the description below, in connection with the attached drawings, wherein:
Fig. 1 is a block diagram of the present invention;
Fig. 2 shows an automatic charging detector circuit of the present invention;
Fig. 3 is a digital oscillator circuit (50 cycles) for the present invention;
Fig. 4 shows an output switching circuit of the present invention; and
Fig. 5 is a block diagram for a conventional inverse transform power supply unit.

### Description of the Invention

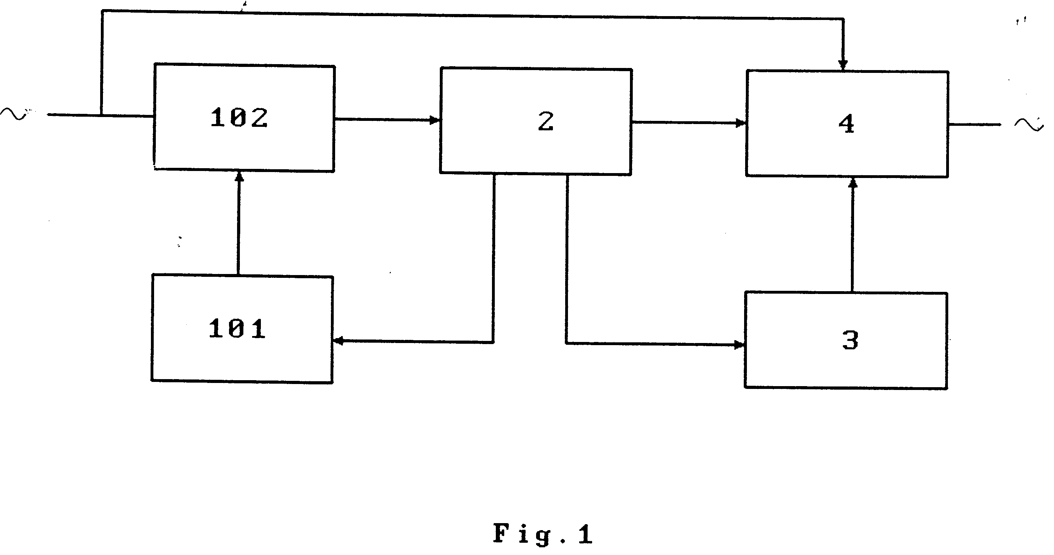

Fig. 1 shows a device according to the present invention, wherein Block 101 represents an automatic charging circuit and Block 102 represents a detector circuit; Blocks 2 and 3 represents the cells and the 50-cycle oscillating circuit, respectively; and Block 4 - the switching circuit. In order to dispense with transformers, a pack of cells 2 having the same voltage as the mains is used. To decrease the volume and weight, rechargeable sealed Cd-Ni cells or sealed nickel hydrogen cells could be used in series. For instance, 180 pieces of Cd-Ni sealed cells of cylindrical shape (0.5 amp-hour and 1.2 v. each) could be packed together in series, to form a 500 w inverse transform power supply unit, weighing only a little more than 4 kilos, as against more than 20 kilos of a conventional 500 W unit.

Tapping of ± 12V, are provided at said pack of cells, for driving the related circuits.

The unit as a whole operates as follows. When there is power supply, said detector circuit 102 detects the cells' output and at the same time controls the charging circuit 101, so as to charge the cells. When a power failure occurs, the d. c. output of the cells is directly fed to the switching circuit 4, which in turn is controlled by said 50-cycle oscillating circuit 3, to supply a 50-cycle alternating power to the load.

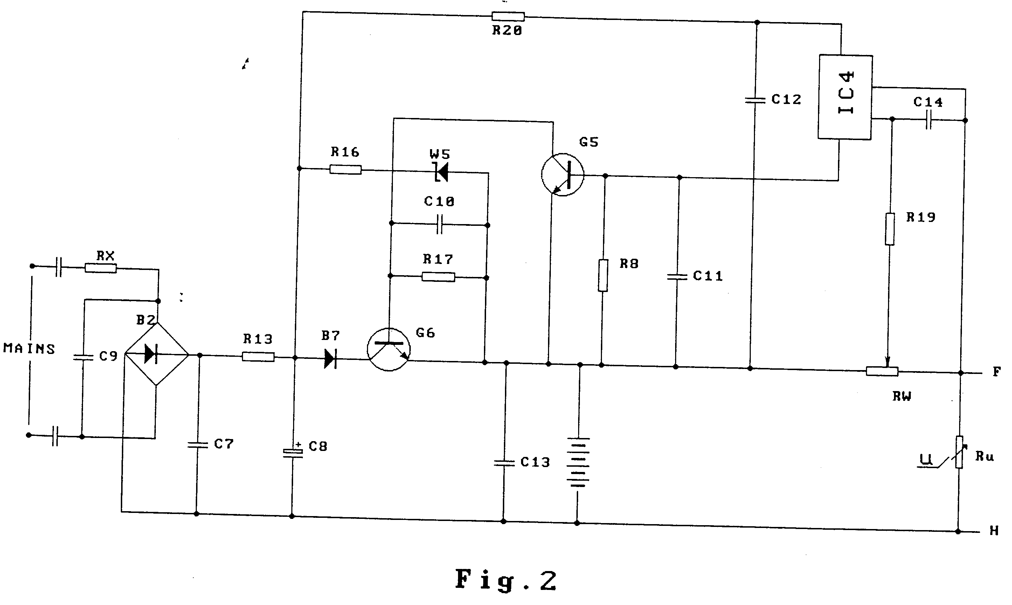

Fig. 2 shows the automatic charging detector circuit of the present invention. As is seen, the mains voltage is rectified through B2, and applied to the cells directly through a switching transistor G6. A detector circuit, which is an integrated circuit IC4, measures the output of the cells, to turn on or cut off said transistor G6, through another transistor G5. Charging the cells in this manner has two advantages: First, biphase rectification makes possible charging at peak values, so as to reduce charging time; secondly, surge of the mains can be directly absorbed by the cells.

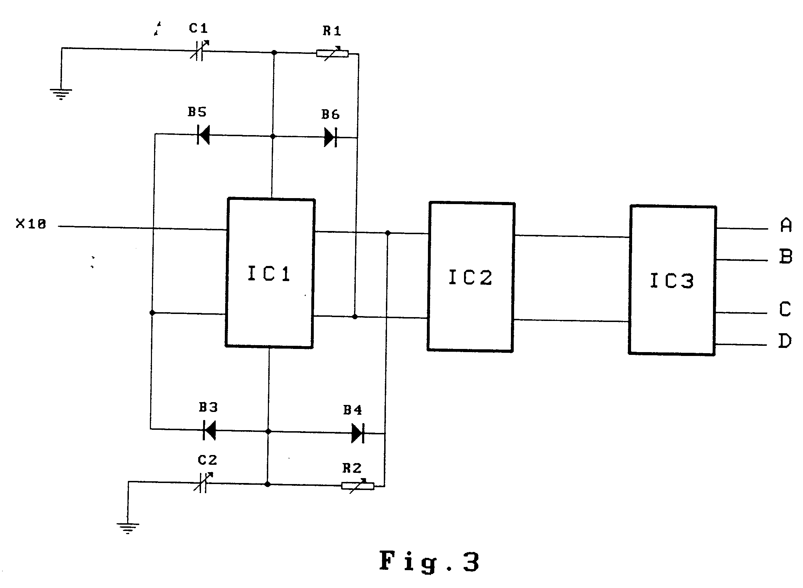

Fig 3 shows an oscillating circuit, which generates a 50-cycle oscilation, such that the level at A is same as at B, and the level at C is same as that at D. That is to say, when A and B are at high level, C and D are low; and vice versa. Each cycle starts from a high level at A, B (or C, D), and ends at a low level at A, B (or C, D).

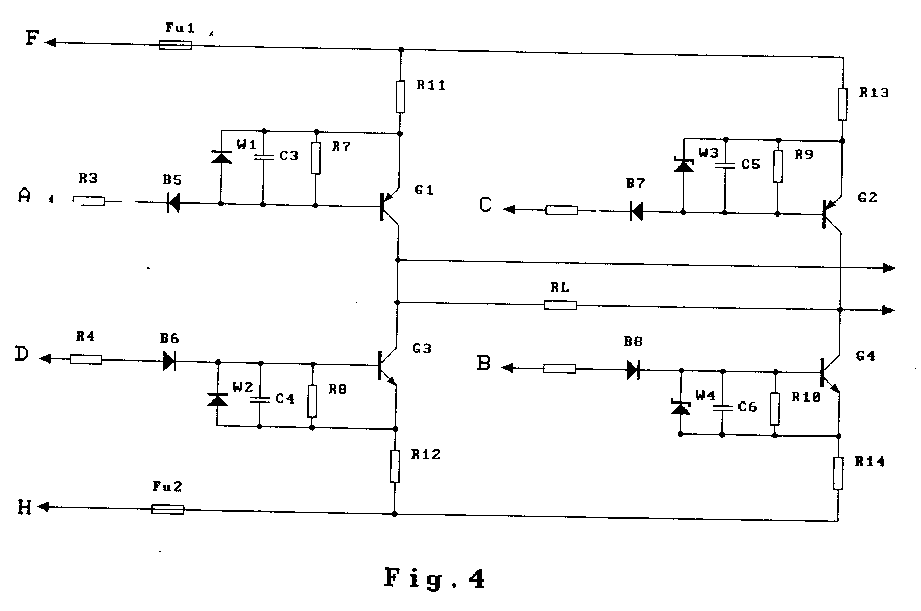

Fig. 4 is a switching circuit of bridge type. When A, B are high, the switching transistors G1, G4 are on, so that a forward direction voltage is formed across the load RL. When C, D are high, the switching transistors G2, G3 are on, so that a backward direction voltage is formed across said load RL. Thus, an alternating power supply is fed directly fro the cells to the load when there is a power failure.

## Claims

1. An emergency power supply unit, capable of high voltage direct inverse transform, comprising a charging detector circuit, a storage battery, an oscillator circuit, and an output switching circuit, said power supply unit being provided with no transformers, and said storage battery being composed of a pack of cells having the same voltage as that of the mains.

2. A power supply unit, as claimed in Claim 1, wherein said cells are connected in series, and are provided with ± 12V. tappings.

3. A power supply unit, as claimed in Claim 1, wherein said cells are sealed Cd-Ni cells or sealed nickel hydrogen cells.
